# EUROPÄISCHE PATENTSCHRIFT

(11) **EP 0 778 711 B1**
(45) Veröffentlichungstag und Bekanntmachung des Hinweises auf die Patenterteilung: **15.03.2000**
(21) Anmeldenummer: 96117211.1
(22) Anmeldetag: 26.10.1996
(51) Int. Cl.: H04Q 1/14, H01R 13/658, H01R 9/24

(54) **Steckverteiler, insbesondere für Datenübertragungsnetze**
Patch panel, especially for data transmission networks
Tableau de connexions, en particulier pour réseaux de transmission de données

(30) Priorität: 07.12.1995 DE 29519389 U
(43) Veröffentlichungstag der Anmeldung: 11.06.1997
(73) Patentinhaber: BTR BLUMBERGER TELEFON- UND RELAISBAU ALBERT METZ, D-78176 Blumberg (DE)
(72) Erfinder: Sticker, Rolf, 78166 Donaueschingen, (DE); Müller, Karl, 78166 Donaueschingen, (DE); Jaag, Dieter, 78050 Villingen-Schwenningen (DE)
(74) Vertreter: Patentanwälte Westphal, Mussgnug & Partner

(56) Entgegenhaltungen:
- EP-A- 0 658 059
- DE-A- 2 515 573
- DE-U- 9 202 912
- DE-U- 9 421 696
- DE-U- 29 519 388
- US-A- 5 412 751

## Beschreibung

Die Erfindung betrifft einen Steckverteiler, insbesondere für Datenübertragungsnetze gemäß dem Oberbegriff des Anspruchs 1.

Steckverteiler dieser Gattung, die üblicherweise auch Patch-Panel genannt werden, dienen bei Datenübertragungsnetzen von EDV- und/oder Telekommunikationsanlagen dazu, eine Mehrzahl von Einzelnetzen oder Einzelgeräten steckbar anzuschließen.

Ein Steckverteiler der eingangs genannten Gattung ist aus der DE 92 02 912 U1 bekannt. Bei diesem Steckverteiler sind die Buchsen nebeneinander auf einer Profilschiene angebracht, wobei die Steckeraufnahmen frontseitig durch Fenster einer Frontplatte zugänglich sind. Die an der Rückseite des Steckverteilers zu den Buchsen geführten und an diese angeschlossenen Kabel sind mittels Kabelbindern auf der Profilschiene festgelegt. Dabei liegen die Kabel jeweils senkrecht zu der Profilschiene und laufen senkrecht zu der Profilschiene über deren rückseitige Kante hinaus. Die zu dem Steckverteiler geführten Kabel laufen in der Regel in einem gemeinsamen Kabelkanal oder Kabelrohr.

Bei der Installation des Steckverteilers müssen die einzelnen Kabel dementsprechend von diesem gemeinsamen Kabelkanal oder Kabelrohr zu den den einzelnen Buchsen zugeordneten Kabelbindern an der rückseitigen Kante der Profilschiene verzweigt werden. Bei Steckverteilern mit einer größeren Zahl von Steckplätzen (Buchsen) führen die Kabel daher zumindest teilweise frei über eine größere Strecke.. Diese frei verlaufenden Kabel hängen durch, stören und sind Zugbeanspruchungen ausgesetzt.

Der Erfindung liegt die Aufgabe zugrunde, einen Steckverteiler der eingangs genannten Gattung so zu verbessern, daß auch bei einer größeren Zahl von Steckplätzen die Kabel geordnet und geschützt zu den Buchsen geführt werden.

Diese Aufgabe wird erfindungsgemäß gelöst durch einen Steckverteiler mit den Merkmalen des Anspruchs 1.

Vorteilhafte Ausführungen der Erfindung sind in den Unteransprüchen angegeben.

Der Grundgedanke der Erfindung besteht darin, an der rückseitigen Kante der Profilschiene des Steckverteilers zusätzlich eine Stützplatte anzubringen, auf welcher die von einem gemeinsamen Kabelkanal, Kabelbaum oder Kabelrohr kommenden Kabel zu den einzelnen Buchsen verzweigt werden, wobei sie auf dieser Stützplatte befestigt werden können. Die Kabel sind auf diese Weise geordnet festgelegt, geschützt und zugentlastet.

Die Stützplatte ist ein gesondertes Teil, welches nur bei Bedarf an die Profilschiene angesetzt wird. Die Profilschiene kann somit serienmäßig in identischer Weise hergestellt werden für Anwendungen mit oder ohne Stützplatte. Dadurch werden Herstellungs- und Lagerkosten niedrig gehalten.

In einer bevorzugten Ausführungsform greift die Stützplatte mit einem abgewinkelten Randsteg in eine Aufnahmenut, die entlang der rückseitigen Kante der Profilschiene verläuft. Eine auf die Profilschiene geschraubte Klemmschiene übergreift den Rand der Stützplatte und hält deren Randsteg in der Aufnahmenut fest, so daß die Stützplatte an der Profilschiene stabil festgeklemmt ist. Die Klemmschiene kann vorzugsweise gleichzeitig als Masseschiene dienen und kann ebenso zur Befestigung der Kabel am Eintritt auf die Profilschiene verwendet werden.

Im folgenden wird die Erfindung anhand eines in der Zeichnung dargestellten Ausführungsbeispiels näher erläutert. Es zeigen
- Figur 1: eine Frontansicht des Steckverteilers,
- Figur 2: eine Draufsicht auf den Steckverteiler,

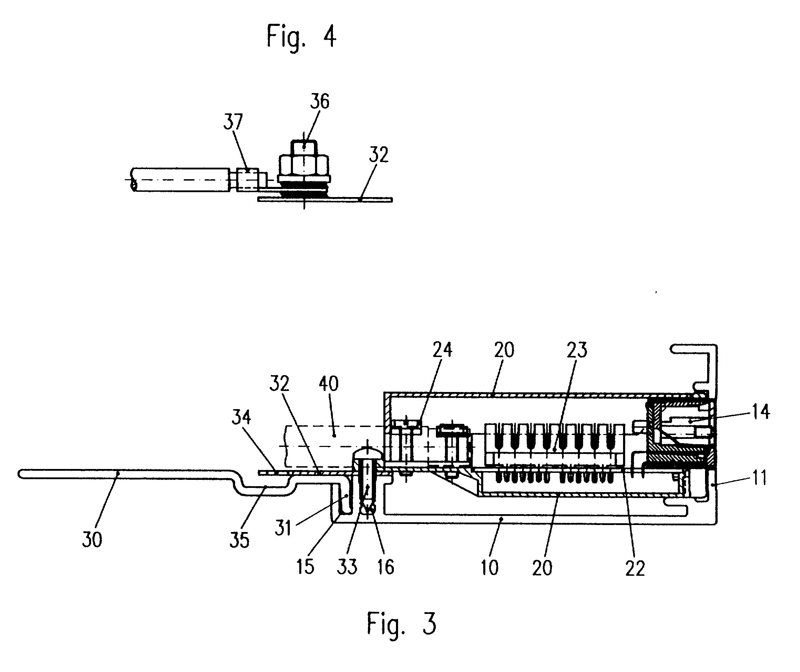

- Figur 3: einen vertikalen Querschnitt durch den Steckverteiler und
- Figur 4: die Erdverbindung des Steckverteilers im Detail.

Der Steckverteiler in dem in der Zeichnung dargestellten Ausführungsbeispiel entspricht dem Steckverteiler, der im einzelnen in der Deutschen Patentanmeldung P4446513.0 beschrieben ist. Soweit Einzelheiten des Steckverbinders nachfolgend nicht beschrieben sind, wird auf die Beschreibung der genannten Patentanmeldung verwiesen.

Der Steckverteiler weist eine Profilschiene 10 auf, die vorzugsweise ein Strangpreßprofil aus Metall ist. Die horizontale Profilschiene 10 weist an ihrer Frontseite einen vertikal nach oben gerichteten Schenkel auf, der die Frontplatte 11 des Steckverteilers bildet. An den beiden Enden der Frontplatte 11 sind Befestigungslöcher 12 vorgesehen, mittels welcher der Steckverteiler in einem Gehäuse montiert werden kann. Die Frontplatte 11 weist eine Reihe nebeneinander angeordneter Fenster 13 auf, durch welche die Buchsen 14 des Steckverteilers zugänglich sind. Im Ausführungsbeispiel ist ein Steckverteiler mit 18 Buchsen 14 gezeigt, die als Western-Buchsen für ein geschirmtes Datennetz ausgebildet sind.

Auf der Profilschiene 10 sind modulartig nebeneinander abgeschirmte Gehäuse 20 angeordnet. Die einzelnen Gehäuse 20 nehmen jeweils zwei Buchsen 14 auf. Die Buchsen 14 sitzen auf in den Gehäusen 20 gehaltenen Leiter-platten 22. Weiter sind auf den Leiterplatten 22 Anschlußklemmen 23 angebracht, die über die Leiterbahnen der Leiterplatten 22 mit den zugehörigen Buchsen 14 leitend verbunden sind. An ihrer Rückseite weisen die Gehäuse 20 Zugentlastungsschellen 24 für die an die Anschlußklemmen 23 anzuschließenden Kabel auf.

An die von der Frontplatte 11 abgekehrte Rückseite der Profilschiene 10 kann eine Stützplatte 30 angesetzt werden, die vorzugsweise als Strangpreßprofil aus Metall geformt ist. Die Stützplatte 30 ist eine im wesentlichen ebene Platte, die im angesetzten Zustand in einer zur Profilschiene 10 parallelen Ebene liegt. Die Stützplatte 30 erstreckt sich vorzugsweise über die gesamte Länge der Profilschiene 10. An der der Profilschiene 10 zugewandten Vorderkante der Stützplatte 30 ist ein Randsteg 31 rechtwinklig nach unten abgebogen. Zur Befestigung der Stützplatte 30 an der Profilschiene 10 wird dieser Randsteg 31 in eine nach oben offene Aufnahmenut 15 eingesetzt, die entlang der rückseitigen Kante der Profilschiene 10 ausgeformt ist. Frontseitig an die Aufnahmenut 15 schließt sich eine weitere Profilnut 16 der Profilschiene 10 an. Eine Klemmschiene 32 aus Metall, die sich über die gesamte Länge der Profilschiene 10 erstreckt, wird auf die Profilnut 16 aufgesetzt und an der Profilschiene 10 befestigt. Hierzu werden Schrauben 33 in Bohrungen der Klemmschiene 32 eingesetzt und in die Profilnut 16 eingeschraubt. Die Schrauben 33 werden gleichzeitig auch zum Festschrauben der Gehäuse 20 an der Profilschiene 10 ausgenützt. Die auf der Profilnut 16 befestigte Klemmschiene 32 ragt über die rückseitige Kante der Profilschiene 10 hinaus und übergreift den frontseitigen Rand der Stützplatte 30 mit dem in die Aufnahmenut 15 eingreifenden Randsteg 31. Die Klemmschiene 32 fixiert auf diese Weise den Randsteg 31 in der Profilnut und hält die Stützplatte 30 an der Profilschiene 10 fest.

Die Klemmschiene 32 weist an ihrer rückseitigen freien Kante ausgestanzte T-förmige Befestigungszungen 34 auf, an welchen Kabelbinder angebracht werden können. Im Bereich der Befestigungszungen 34 ist in das Profil der Stützplatte 30 eine in Längsrichtung durchlaufende Rinne 35 eingeformt, so daß die Befestigungszungen 34 zum Aufbringen der Kabelbinder frei liegen.

Die Klemmschiene 32 ist vorzugsweise gleichzeitig als Masseschiene ausgebildet, die zur gemeinsamen Erdung der Gehäuse 20 und der Abschirmungen der Kabel dient. Hierzu sitzen Erdungsbolzen 36 auf beiden Enden der Klemmschiene 32 und sind mit dieser leitend verbunden. Auf den Erdungsbolzen 36 sitzen jeweils Kabelschuhe 37 zum Anschließen eines Erdungskabels.

In der Fläche der Stützplatte 30 sind T-förmige Befestigungszungen 38 ausgestanzt. Die Befestigungszungen 38 dienen ebenfalls zum Anbringen von Kabelbindern. Jeweils an den beiden Enden der Stützplatte 30 sind dabei die Befestigungszungen 38 senkrecht zur rückseitigen Kante der Stützplatte 30 angeordnet, während die dazwischen im mittleren Bereich der Stützplatte 30 angeordneten Befestigungszungen 38 parallel zur rückseitigen Kante der Stützplatte 30 angeordnet sind.

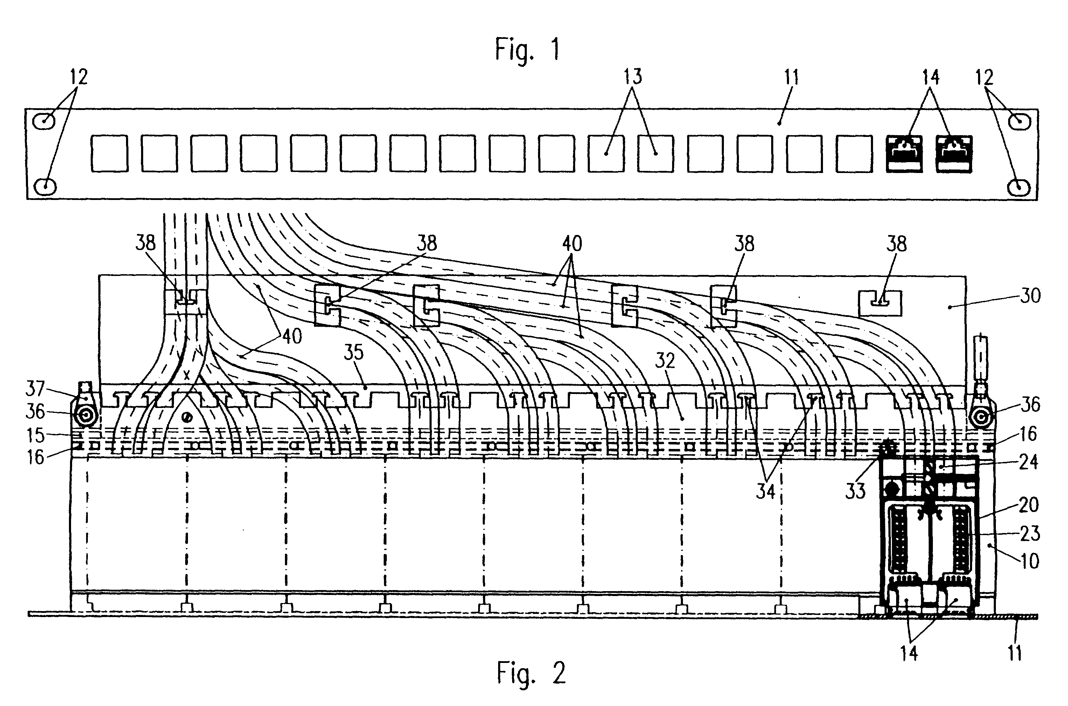

Wie Figur 2 zeigt, werden die von einem Kabelkanal, Kabelrohr oder Kabelbaum kommenden Kabel 40 auf die Stützplatte 30 gelegt und auf dieser Stützplatte 30 zu den Gehäusen 20 geführt, welche die Buchsen 14 mit den Anschlußklemmen 23 aufnehmen. Zum Festlegen der Kabel 40 auf der Stützplatte 30 werden Kabelbinder verwendet, die an den Befestigungszungen 38 angebracht werden. Vor dem Eintritt in die Gehäuse 20 werden die Kabel 40 nochmals mittels Kabelbindern festgelegt, die an den Befestigungszungen 34 der Klemmschiene 32 angebracht werden. Die Anordnung der Befestigungszungen 38 auf der Stützplatte 30 ist so gewählt, daß die Kabel 40 jeweils parallel zur Längserstreckung der Stützplatte 30 zu einem Ende der Stützplatte 30 geführt werden und an diesem Ende im wesentlichen rechtwinklig über die rückseitige Kante der Stützplatte 30 führen.

### Bezugszeichenliste

- 10: Profilschiene
- 11: Frontplatte
- 12: Befestigungslöcher
- 13: Fenster
- 14: Buchsen
- 15: Aufnahmenut
- 16: Profilnut

- 20: Gehäuse

- 22: Leiterplatten
- 23: Anschlußklemme
- 24: Zugentlastungsschelle

- 30: Stützplatte
- 31: Randsteg
- 32: Klemmschiene
- 33: Schrauben
- 34: Befestigungszungen (v. 32)
- 35: Rinne
- 36: Erdungsbolzen
- 37: Kabelschuh
- 38: Befestigungszungen (v. 30)

- 40: Kabel

## Patentansprüche

1. Steckverteiler, insbesondere für Datenübertragungsnetze, mit einer horizontalen Profilschiene (10), mit auf der Profilschiene (10) angebrachten Buchsen (14), deren Steckeraufnahmen an einer an der Frontseite der Profilschiene (10) vertikal nach oben gerichteten Frontplatte (11) nebeneinander angeordnet sind, und mit Befestigungsmitteln (38) für rückseitig zu den Buchsen (14) geführte Kabel (40), dadurch gekennzeichnet, dass der Steckverteiler eine Stützplatte (30) aufweist, dass die Profilschiene (10) an ihrer von der Frontplatte (11) abgekehrten rückseitigen Längskante eine Aufnahme (15) aufweist, dass die sich im wesentlichen über die Länge der Profilschiene (10) erstreckende Stützplatte (30) in der Weise in diese Aufnahme (15) einsetzbar und an der Profilschiene (10) befestigbar ist, dass die Oberseiten der Stützplatte (30) und der Profilschiene (10) in im wesentlichen parallelen Ebenen liegen, und dass die Stützplatte (30) Befestigungsmittel (38) für die Kabel (40) aufweist.

2. Steckverteiler nach Anspruch 1, dadurch gekennzeichnet, dass die Aufnahme eine entlang der rückseitigen Kante der Profilschiene (10) ausgebildete Aufnahmenut (15) ist und dass die Stützplatte (30) mit einem abgebogenen Randsteg (31) in die Aufnahmenut (15) eingreift und in dieser festlegbar ist.

3. Steckverteiler nach Anspruch 2, dadurch gekennzeichnet, dass an der Profilschiene (10) eine Klemmschiene (32) befestig bar ist, die den frontseitigen Rand der Stützplatte (30) mit dem in die Aufnahmenut (15) eingreifenden Randsteg (31) übergreift.

4. Steckverteiler nach Anspruch 3, dadurch gekennzeichnet, daß die Klemmschiene (32) als Masseschiene ausgebildet ist.

5. Steckverteiler nach Anspruch 3 oder 4, dadurch gekennzeichnet, daß an der Klemmschiene (32) den einzelnen Buchsen (14) zugeordnete Befestigungsmittel (34) für die zu den Buchsen (14) führenden Kabel (40) angeordnet sind.

6. Steckverteiler nach Anspruch 5, dadurch gekennzeichnet, daß die Befestigungsmittel an der freien rückseitigen Kante der Klemmschiene ausgestanzte Befestigungszungen (34) für Kabelbinder sind.

7. Steckverteiler nach einem der vorhergehenden Ansprüche, dadurch gekennzeichnet, daß die Befestigungsmittel der Stützplatte (30) aus der Stützplatte (30) ausgestanzte Befestigungszungen (38) für Kabelbinder sind.

## Revendications

1. Connecteur distributeur, notamment pour des réseaux de transmission de données comportant un rail profilé horizontal (10), des douilles (14) installées sur le rail profilé (10) et dont les logements de connexion sont juxtaposés les uns aux autres au niveau d'une plaque frontale (11) dirigée verticalement vers le haut du côté frontal du rail profilé (10), et des moyens de fixation (38) pour des câbles (40) conduits du côté arrière vers les douilles (14),
caractérisé en ce que
- le connecteur comporte une plaque d'appui (30),
- le rail profilé (10) comporte, au niveau de son arête longitudinale arrière opposée à la plaque frontale (11), un logement (15),
- la plaque d'appui (30), qui s'étend pratiquement sur toute la longueur du rail profilé (10), se loge dans le logement (15) et se fixe sur le rail profilé (10) pour que le côté supérieur de la plaque d'appui (30) et du rail profilé (10) se situent dans des plans essentiellement parallèles et,
- la plaque d'appui (30) comporte des moyens de fixation (38) pour les câbles (40).

2. Connecteur distributeur selon la revendication 1,
caractérisé en ce que
le logement est une rainure de réception (15) réalisée le long de l'arête du côté arrière du rail profilé (10), et la plaque d'appui (30) se loge avec son bord recourbé (31) dans la rainure de réception (15) et se bloque dans celle-ci.

3. Connecteur distributeur selon la revendication 2,
caractérisé en ce qu'
un rail de serrage (32) se fixe sur le rail profilé (10), ce rail dépassant du bord frontal de la plaque d'appui (30) avec le rebord (31) pénétrant dans la rainure de réception (15).

4. Connecteur distributeur selon la revendication 3,
caractérisé en ce que
le rail de serrage (32) est un rail de mise à la masse.

5. Connecteur distributeur selon l'une quelconque des revendications 3 ou 4,
caractérisé en ce qu'
au niveau du rail de serrage (32), il y a des moyens de fixation (34) associés aux différentes douilles (14) pour les câbles (40) reliés aux douilles (14).

6. Connecteur distributeur selon la revendication 5,
caractérisé en ce que
les moyens de fixation sont des languettes de fixation (34) pour fixe-câbles, matricées sur l'arête arrière libre du rail de serrage.

7. Connecteur distributeur selon l'une quelconque des revendications précédentes,
caractérisé en ce que
les moyens de fixation de la plaque d'appui (30) sont des languettes de fixation (38) pour fixe-câbles, matricées de la plaque d'appui (30).

## Claims

1. A patch panel, in particular for data transmission networks, with a horizontal sectional bar (10), with sockets (14) mounted on the sectional bar (10), the plug mounting devices of which are disposed next to one another on a front plate (11) vertically upwardly directed on the front side of the sectional bar (10), and with attachment means (38) for cables (40) conveyed on the rear side to the sockets (14),
**characterised in that** the patch panel comprises a support plate (30),
**in that** the sectional bar (10) comprises a mounting device (15) on its rear longitudinal edge faced way from the front plate (11),
**in that** the support plate (30) extending substantially over the length of the sectional bar (10) can be inserted into this mounting groove (15) and can be fixed to the sectional bar (10) so that the upper sides of the support plate (30) and of the sectional bar (10) lie in substantially parallel planes,
**and in that** the support plate (30) comprises attachment means (38) for the cables (40).

2. A patch panel according to Claim 1,
**characterised in that** the mounting device is a mounting groove (15) constructed along the rear edge of the sectional bar (10)
**and in that** the support plate (30) engages with an angled edge web (31) into the mounting groove (15) and can be fixed therein.

3. A patch panel according to Claim 2,
**characterised in that** a clamping rail (32), which engages over the front edge of the support plate (30) with the edge web (31) engaging in the mounting groove (15), can be fixed on the sectional bar (10).

4. A patch panel according to Claim 3,
**characterised in that** the clamping bar (32) is constructed as a chassis ground bus.

5. A patch panel according to Claim 3 or 4,
**characterised in that** disposed on the clamping bar (32) are attachment means (34) associated with the individual sockets (14) for the cables (40) leading to the sockets (14).

6. A patch panel according to Claim 5,
**characterised in that** the attachment means are fastening blades (34) for cable fasteners that are punched out at the free rear edge of the clamping bar.

7. A patch panel according to one of the preceding Claims,
**characterised in that** the attachment means of the support plate (30) are fastening blades (38), punched from the support plate (30), for cable fasteners.
